# EUROPÄISCHE PATENTSCHRIFT

(11) **EP 4 059 694 B1**
(45) Veröffentlichungstag und Bekanntmachung des Hinweises auf die Patenterteilung: **21.06.2023**
(21) Anmeldenummer: 21163095.9
(22) Anmeldetag: 17.03.2021
(51) Int. Cl.: B29C 48/00, B29C 48/07, B29C 48/25, B29C 48/275

(54) **VERFAHREN ZUM EINFACHEN ANFAHREN EINER PRODUKTIONSANLAGE ZUR HERSTELLUNG EXTRUDIERTER PLATTEN**
METHOD FOR EASILY STARTING OF A PRODUCTION PLANT FOR PRODUCING EXTRUDED PANELS
PROCÉDÉ DE DÉMARRAGE SIMPLE D'UNE INSTALLATION DE PRODUCTION DESTINÉ À LA FABRICATION DE PLAQUES EXTRUDÉES

(43) Veröffentlichungstag der Anmeldung: 21.09.2022
(73) Patentinhaber: Akzenta Paneele + Profile GmbH, 56759 Kaisersesch (DE)
(72) Erfinder: HANNIG, Hans-Jürgen, 51427 Bergisch Gladbach (DE); HÜLLENKREMER, Felix, 56076 Koblenz (DE); WENDLING, Peter, 56290 Mörsdorf (DE)
(74) Vertreter: Michalski Hüttermann & Partner Patentanwälte mbB

(56) Entgegenhaltungen:
- WO-A1-2010/024292
- DE-A1-102007 004 247
- US-A- 5 190 711
- US-A1- 2007 023 953

## Beschreibung

Die Erfindung betrifft ein Verfahren, mit dessen Hilfe eine Produktionsanlage zur Herstellung extrudierter Platten einfach angefahren werden können. Die extrudierten Platten können insbesondere zur Herstellung von Paneelen zur Abdeckung einer Oberfläche eines Raums verwendet werden.

Aus WO 2007/079845 A1 ist eine Produktionsanlage für aus Holz hergestellte Paneele bekannt, bei dem die gewünschte Paneellänge mit Hilfe eines Trennwerkzeugs von einem längeren Halbzeug abgetrennt werden kann.

Aus EP 3 578 384 A1 ist eine Produktionsanlage für aus Kunststoff hergestellte Paneele bekannt, bei dem zunächst ein plattenförmiges Endlosprofil hergestellt wird. Weitere bekannten Produktionsanlagen zur Herstellung extrudierten Platten sind in den Dokumenten WO2010/024292A1, DE10-2007-004247A1, US2007/023953 A1 und US2007/023953A1 beschrieben.

Es besteht ein ständiges Bedürfnis Paneele kostengünstig herstellen zu können.

Es ist die Aufgabe der Erfindung Maßnahmen aufzuzeigen, die eine kostengünstige Herstellung von Paneelen ermöglichen.

Die Lösung der Aufgabe erfolgt durch ein Verfahren mit den Merkmalen des Anspruchs 1. Bevorzugte Ausgestaltungen der Erfindung sind in den Unteransprüchen und der nachfolgenden Beschreibung angegeben, die jeweils einzeln oder in Kombination einen Aspekt der Erfindung darstellen können.

Ein Aspekt der Erfindung betrifft ein Verfahren zum Anfahren einer Produktionsanlage zur Herstellung extrudierter Platten, insbesondere für Paneele zur Abdeckung einer Oberfläche eines Raums, bei dem ein extrudiertes Halbzeug mit einem freien Ende auf eine Fördereinrichtung zu gedrückt wird, wobei die Fördereinrichtung ausgestaltet ist das Halbzeug zu einer Vereinzelungseinrichtung zum Abtrennen von vereinzelten Platten von dem zu einem Endlosgrundprofil abgekühlten und verfestigten Halbzeug, insbesondere entlang einer quer zur Förderrichtung verlaufenden Trennlinie, zu ziehen, wobei ein sich in Förderrichtung erstreckender Fördergurt auf der Fördereinrichtung aufgelegt wird, das freie Ende des Halbzeugs auf den Fördergurt gedrückt wird, der Fördergurt zusammen mit dem Halbzeug auf die Vereinzelungseinrichtung zu gezogen wird und das an der Vereinzelungseinrichtung ankommende freie Ende des Halbzeugs in die Vereinzelungseinrichtung eingeführt wird, während der Fördergurt vor der Vereinzelungseinrichtung von dem Halbzeug weg, insbesondere nach unten, abgezogen wird.

Die Produktionsanlage kann einen insbesondere als Breitschlitzextruder ausgestalteten, Extruder aufweisen, aus dem Extrudat herausgedrückt wird. Das Extrudat kann insbesondere einem mehrere, vorzugsweise temperierte, Kalanderwalzen aufweisenden Kalander zugeführt werden, in dem das Extrudat durch Abkühlen verfestigt und in eine für das Halbzeug gewünschte Form gewalzt werden kann. Das Halbzeug wird hierbei von dem Extruder und/oder von dem Kalander mit einer in Förderrichtung ausgerichteten Druckkraft auf die Fördereinrichtung gedrückt. Das Halbzeug kann über die Fördereinrichtung von dem Extruder und/oder dem Kalander zu der Vereinzelungseinrichtung gefördert werden, wobei das Halbzeug in dem Bereich zwischen dem an dem eingangsseitigen Ende der Fördereinrichtung vorgesehenen Extruder und/oder Kalander und der an dem ausgangsseitigen Ende der Fördereinrichtung vorgesehenen Vereinzelungseinrichtung, insbesondere durch natürliche Konvektion, sich soweit abkühlen und verfestigen kann, dass das Halbzeug in einem optimalen Temperaturbereich von der Vereinzelungseinrichtung in einzelne Platten abgetrennt werden kann. Beispielsweise weist die Vereinzelungseinrichtung einen Einzug auf, über den auf das Halbzeug eine Zugkraft in Förderrichtung aufgeprägt wird, um das zu einem Endlosgrundprofil abgekühlte und verfestigte Halbzeug in die Vereinzelungseinrichtung mit einer definierten Fördergeschwindigkeit einzuziehen. Vorzugsweise ist die an dem ausgangsseitigen Ende der Fördereinrichtung angreifende Zugkraft derart an die an dem eingangsseitigen Ende der Fördereinrichtung angreifende Druckkraft angepasst, dass durch Wärmedehnungseffekte während einer Abkühlung des Halbzeugs entstehende Stauchungen und Streckungen zumindest zu einem Großteil kompensiert sind.

Wenn die Produktionsanlage, beispielsweise nach einer Betriebsstörung und/oder einem Produktwechsel, angefahren werden soll, ist auf der Fördereinrichtung zunächst noch kein Halbzeug vorhanden. Dadurch ist es bei einem Start des Extruders auch nicht möglich auf das Halbzeug eine Zugkraft aufzuprägen. Die beim Start des Extruders vorhandenen Druckkräfte würden stattdessen das noch vergleichsweise weiche Halbzeug auf der Fördereinrichtung stark zusammenstauchen, so dass schließlich keine Bewegung des Halbzeugs über die Fördereinrichtung mehr möglich wäre oder das Einfädeln des freien Endes des Halbzeugs in die Vereinzelungseinrichtung vereitelt wäre. Die im kontinuierlichen Normalbetrieb an dem Halbzeug angreifende Zugkraft wird insbesondere erst am ausgangsseitigen Ende der Fördereinrichtung aufgebracht, damit das Halbzeug seine Formgestaltung als plattenförmiges Endlosmaterial beibehält. Grundsätzlich wäre es möglich die Fördereinrichtung über ihre gesamte Erstreckung in Förderrichtung mit aktiv angetriebenen Rollen zu versehen, damit auch in der Anfahrfahrphase vor dem Erreichen des kontinuierlichen Normalbetriebs ein definiertes Abziehen des Halbzeugs als plattenförmiges Endlosprofil möglich ist. Dies wäre jedoch mit erheblichen Kosten für die Fördereinrichtung verbunden und würde die Herstellungskosten der mit Hilfe der Produktionsanlage hergestellten Paneele erhöhen.

Anstatt die Fördereinrichtung über ihre Erstreckung mit aktiv angetriebenen Rollen auszustatten, wird der Fördergurt auf die Fördereinrichtung gelegt. Das herausgedrückte freie Ende des Halbzeugs kann dadurch auf der in Schwerkraftrichtung nach oben weisenden Oberseite des Fördergurts auftreffen. Hierbei kann sich zwischen dem Halbzeug und dem Fördergurt gegebenenfalls über ein dazwischen vorgesehenes Vlies zumindest ein ausreichender Reibschluss einstellen, so dass das Halbzeug zusammen mit dem Fördergurt durch eine an dem Fördergurt angreifenden Zugkraft von dem Extruder und/oder von dem Kalander weggezogen werden kann. Die an dem Fördergurt angreifende Zugkraft kann insbesondere von einer sowieso vorgesehenen Abzugseinrichtung der Fördereinrichtung bereitgestellt werden. Mit Hilfe des Fördergurts kann das Halbzeug bis kurz vor die Vereinzelungseinrichtung gezogen werden. In dem Zeitraum, den das freie Ende des Halbzeugs benötigt, um von dem eingangsseitigen Ende der Fördereinrichtung zu dem ausgangsseitigen Ende der Fördereinrichtung zu gelangen, ist das Halbzeug soweit abgekühlt und verfestigt, dass das Halbzeug leicht in die Vereinzelungseinrichtung automatisiert und/oder von Hand eingefädelt werden kann. Hierbei kann der Fördergurt von dem Halbzeug abgezogen werden, so dass der anderenfalls gegebenenfalls an dem Halbzeug haftende Fördergurt nicht mit in die Vereinzelungseinrichtung gelangt. Eine Beschädigung des Fördergurts in der Vereinzelungseinrichtung sowie Betriebsstörungen durch den in der Vereinzelungseinrichtung präsenten Fördergurt können dadurch vermieden werden. Nachdem das freie Ende des Halbzeugs in der Vereinzelungseinrichtung eingefädelt ist, vorzugsweise nachdem erstmalig eine Platte von dem zu dem Endlosgrundprofil verfestigten Halbzeug in der Vereinzelungseinrichtung abgetrennt wurde, kann auch ohne die Hilfe des Fördergurts eine ausreichende Zugkraft auf das Halbzeug ausgeübt werden. Der Fördergurt kann dann vollständig entfernt werden, so dass der Fördergurt keinen Kontakt mehr zu dem Halbzeug hat. Nach der Entfernung des Fördergurts kann grundsätzlich der kontinuierliche Normalbetrieb der Produktionsanlage beginnen und die Anfahrphase beendet werden. Gegebenenfalls kann sich die Anfahrphase zeitlich über das Einfädeln des freien Endes des Halbzeugs in die Vereinzelungseinrichtung hinaus erstrecken, beispielsweise weil ein designiertes Temperaturprofil in dem Kalander noch nicht erreicht wurde oder sonstige Regelgrößen noch nicht eingeschwungen sind.

Der Fördergurt stellt ein sehr kostengünstiges und einfach zu bedienendes Hilfsmittel dar, um in der Anfahrphase der Produktionsanlage das Halbzeug als plattenförmiges Endlosprofil in die Vereinzelungseinrichtung einzufädeln. Hierbei ist es nicht erforderlich die Fördereinrichtung mit einer Vielzahl von aktiv angetriebenen Rollen auszugestalten und/oder über die gesamte Erstreckung der Fördereinrichtung ein aktiv angetriebenes Laufband vorzusehen. Die Herstellungskosten der Produktionsanlage, insbesondere für die Fördereinrichtung, können dadurch gering gehalten werden. Da das Förderband nicht als geschlossene Schlaufe, sondern als Band mit zwei freien Enden ausgestaltet sein kann, ist es einfach möglich das Förderband für den Start der Anfahrphase vorzubereiten und nach dem Einfädeln des freien Endes des Halbzeugs in der Vereinzelungseinrichtung abzuziehen und wegzuschaffen. Wenn das Förderband im kontinuierlichen Normalbetrieb nicht benötigt wird, kann das Förderband platzsparend aufgewickelt und für den nächsten Einsatz in einer weiteren Anfahrphase zwischenzeitlich platzsparend gelagert werden. Durch das Abziehen des freien Endes des Halbzeugs mit Hilfe des Fördergurtes während der Anfahrphase kann die Fördereinrichtung kostengünstig im Wesentlichen ausschließlich für den kontinuierlichen Normalbetrieb der Produktionsanlage ausgelegt sein, so dass eine kostengünstige Herstellung von Paneelen ermöglicht ist.

Eine geeignete Zusammensetzung des extrudierten Halbzeugs ist beispielsweise in EP 3 578 384 A1 angegeben, auf deren diesbezüglicher Inhalt hiermit als Teil der Erfindung Bezug genommen wird. Als Material für das Halbzeugs eignet sich insbesondere ein thermoplastischer Kunststoff, beispielsweise Polypropylen (PP) sowie Homo- Co- oder Terpolymere des PP, Polyethylen (PE), thermoplastische Elastomere wie beispielsweise thermoplastische Polyolefine (TPO), thermoplastische Styrole (TPS), thermoplastisches Polyurethan (TPU), thermoplastische Vulkanisate (TPV) oder thermoplastische Copolyester (TPC). Sämtliche der zuvor genannten thermoplastischen Kunststoffe können in üblicher Weise auch Füllstoffe, wie z.B. Kreide, Schichtsilikate oder Gesteinsmehle aufweisen. Zur Anpassung der physikochemischen Eigenschaften der Kunststoffe kann es darüber hinaus vorgesehen sein, dass die Kunststoffe weitere, die entsprechenden Eigenschaften des Kunststoffs modifizierende Additive, wie z.B. Weichmacher, UV-Stabilisatoren, Antioxidantien, Flammschutzmittel, Antistatika, Schlagzähigkeitsmodifikatoren und/der Farbstoff aufweisen.

Die Vereinzelungseinrichtung kann die Platte mit Hilfe eines Trennwerkzeugs entlang der Trennlinie von dem Endlosgrundprofil abtrennen. Das Abtrennen der jeweiligen Platte erfolgt insbesondere durch ein spanloses Trennverfahren, insbesondere Abscheren an einer Messerschneide, so dass abgetrennte Späne, welche die Vereinzelungseinrichtung verschmutzen und beeinträchtigen könnten oder die Oberflächen der Platte und/oder des Endlosgrundprofils beeinträchtigen, vermieden sind. Hierbei wird die Erkenntnis ausgenutzt, dass das Endlosgrundprofil auch nach einer zwischenzeitlichen leichten Abkühlung noch im optimalen Temperaturbereich vorliegen kann und vergleichsweise weich und duktil ist, so dass ein verschleißarmes Abtrennen der Platte durch ein spanloses Abscheren leicht durchgeführt werden kann. Insbesondere ist das Trennwerkzeug der Vereinzelungseinrichtung mit der Fördergeschwindigkeit des Endlosgrundprofis in Förderrichtung mitbewegbar ausgestaltet. Durch das Mitbewegen des Trennwerkzeug in Förderrichtung mit der gleichen Geschwindigkeit wie das Endlosgrundprofil kann eine saubere Schnittkante erzeugt werden, wie sonst nur bei einem Schneiden eines unbeweglichen Werkstücks erzeugt werden könnte. Eine angeschrägte Schnittfläche der Platte kann dadurch vermieden werden, so dass die Platte im Wesentlichen einem Quader entspricht.

Die vereinzelten Platten können insbesondere zu Paneelen weiterverarbeitet werden, mit dessen Hilfe eine Oberfläche eines Raums abgedeckt werden kann. Beispielsweise können die Paneele als Bodenlaminat einen optisch ansprechenden Fußboden des Raums ausbilden. Das Paneel kann einen auf einen Quader als Grundform basierenden Paneelkörper aufweisen, dessen Längserstreckung in der Regel deutlich größer als seine Quererstreckung ist, während die Dicke des Paneelkörper in Dickenrichtung in der Regel kleiner als seine Quererstreckung ist. Der Paneelkörper kann insbesondere durch die vereinzelte Platte oder einem nach mindestens einem weiteren Zerteilen der Platte vorliegenden Plattenkörper ausgebildet sein.

Der Paneelkörper kann an der einen in Längsrichtung verlaufenden Langseite einen insbesondere in Längsrichtung durchgängig verlaufenden und in Querrichtung abstehenden Spund-Ansatz und an der anderen Seite eine in Querrichtung in dem Paneelkörper eingebrachte Spund-Nut aufweisen, so dass im Wesentlichen identisch ausgestaltete Paneele an den Langseiten anliegend über eine als Spundung ausgestaltete Feder-Nut-Verbindung miteinander verbunden werden können. Zudem kann von der in Querrichtung verlaufenden Kurzseite des Paneelkörpers ein Arretierhaken in Längsrichtung abstehen, während an der anderen Kurzseite des Paneelkörpers ein Federkörper abstehen kann, der eine Aufnahmenut begrenzt, so dass im Wesentlichen identisch ausgestaltete Paneele auch an ihren Kurzseiten über eine Feder-Nut-Verbindung miteinander verrastet werden können. Bei der Montage kann das eine Paneel auf einem eine Gebrauchsebene definierenden Untergrund, beispielsweise ein Boden, eine Seitenwand oder eine Decke eines Raums, flächig aufliegen. Das weitere Paneel kann gegebenenfalls beispielsweise unter einem Winkel von ca. 30° leicht angeschrägt mit einem seitlich neben dem Paneel verlaufenden bereits montierten Paneel an der Langseite angesetzt und danach auf den Untergrund geschwenkt werden, wodurch die Feder-Nut-Verbindung zwischen dem Arretierhaken des Paneels und der Aufnahmenut des weiteren Paneel hergestellt werden kann.

Es kann im kontinuierlichen Normalbetrieb der Produktionsanlage vorgesehen sein, dass an einem zu dem Extruder weisenden Ende der Fördereinrichtung, an dem, insbesondere in einem im Wesentlichen pastösen und/oder schmelzförmigen Zustand vorliegenden, Halbzeug eine in Förderrichtung weisende Druckkraft und an einem zu der Vereinzelungseinrichtung weisenden Ende der Fördereinrichtung, an dem, insbesondere in einem im Wesentlichen festen Zustand vorliegenden, Endlosgrundprofil des Halbzeugs eine in Förderrichtung weisende Zugkraft vorliegt, wobei die angreifende Druckkraft und die angreifende Zugkraft derart bemessen sind, dass durch Wärmedehnungseffekte während einer Abkühlung des Halbzeugs entstehende Stauchungen und Streckungen zumindest zu einem Großteil kompensiert sind. Hierbei kann insbesondere die Fördergeschwindigkeit entlang der Förderrichtung lokal derart angepasst sein, dass Wärmedehnungseffekte infolge einer entlang der Förderrichtung stattfindenden Abkühlung sowie eine Schrumpfmaß des Halbzeugs in Förderrichtung kompensiert werden können. Die am weichen Ende des Halbzeugs angreifende Druckkraft kann insbesondere durch nachfolgendes den Kalander verlassendes Material des Halbzeugs aufgebaut werden, während die Zugkräfte an den bereits hinreichend verfestigten Bereichen des Halbzeugs durch ein aktiv angreifendes Förderelement der Fördereinrichtung, insbesondere eine aktive angetriebene Rollen aufweisende Abzugseinrichtung, bereitgestellt werden können. Unnötige innere Spannungen in dem Halbzeug können dadurch vermieden werden, so dass eine ungewollte Verformung, beispielsweise eine Wellenbildung, des Halbzeugs vermieden werden kann. Die Fördergeschwindigkeit des Fördergurts in der Anfahrphase kann insbesondere im Wesentlichen einer durchschnittlichen Fördergeschwindigkeit des Halbzeugs im kontinuierlichen Normalbetrieb entsprechend. Dadurch können unnötig große Stauchungen und Dehnungen des Halbzeugs in der Anfahrphase vermieden werden, wodurch das Einfädeln des Halbzeugs in die Vereinzelungseinrichtung vereinfacht ist.

Die Fördereinrichtung kann insbesondere aus verschiedenen Teileinheiten zusammengesetzt sein, deren jeweilige Fördergeschwindigkeit gleich oder unterschiedlich eingestellt sein können. Durch in verschiedenen Teilbereichen unterschiedlich eingestellte Fördergeschwindigkeiten kann insbesondere eine durch eine Abkühlung im Ausmaß eines thermisch bedingten Schrumpfmaßes bedingte Längenverringerung des jeweils geförderten Profils kompensiert werden, so dass durch Wärmedehnungseffekte verursachte unnötige Spannungen in dem geförderten Profil vermieden werden können. Insbesondere kann die Fördereinrichtung im Bereich der Vereinzelungseinrichtung unterbrochen sein, damit die Vereinzelungseinrichtung einen quer zur Förderrichtung verlaufenden durchgängigen Trennschnitt durchführen kann. Hierbei kann die in Förderrichtung nach der Vereinzelungseinrichtung vorgesehene Teileinheit der Fördereinrichtung einen größere Fördergeschwindigkeit als eine in Förderrichtung vor der Vereinzelungseinrichtung vorgesehene Teileinheit der Fördereinrichtung, so dass die Vereinzelung der abgetrennten Platten verbessert sein kann. Vorzugsweise ist ein zur Vereinzelungseinrichtung weisendes Ende der Fördereinrichtung zu der Vereinzelungseinrichtung beabstandet, so dass ein von dem Endlosgrundprofil leicht zu überbrückender Freiraum ausgebildet ist, der groß genug ist, um den Fördergurt von dem zu dem Endlosgrundprofil verfestigten Halbzeug abziehen zu können. Die Fördereinrichtung beziehungsweise die jeweilige Teileinheit der Fördereinrichtung kann beispielsweise aktiv angetriebene und/oder passiv mitdrehende Rollen und/oder ein in Förderrichtung bewegtes Band aufweisen, um das jeweilige Profil in Förderrichtung fördern zu können. Wenn die Fördereinrichtung als Antriebsmittel zum Fördern des Halbzeugs nur angetriebene Rollen aufweist, ist es möglich zwischen den Rollen einen die natürliche Konvektion zur Abkühlung des Halbzeugs begünstigenden Abstand vorzusehen, wobei der Abstand zwischen einander nachfolgenden Rollen gering genug ist, dass eine Wellenbildung des Halbzeugs in einem noch nicht verfestigten und eher weichen Teilbereich vermieden ist. Die Fördereinrichtung ist zumindest bis zur Vereinzelungseinrichtung insbesondere geradlinig, das heißt ohne Kurven oder Abbiegungen, ausgeführt, so dass das Halbzeug ohne Biegungen entlang einer, vorzugsweise in einer Horizontalebene liegenden, Geraden gefördert werden kann.

Die Produktionsanlage kann in Förderrichtung hinter dem Extruder und/oder dem Kalander ein Glättwerk zum Glätten einer Oberseite und/oder einer Unterseite des Halbzeugs, insbesondere mit einer definierten Oberflächengüte, aufweisen. Das Glättwerk kann insbesondere im Wesentlichen unmittelbar nach dem Kalander vorgesehen sein. Das Glättwerk kann insbesondere eine unteres Presswerkzeug, insbesondere eine ebene Platte oder Walze, und ein oberes Presswerkzeug, insbesondere eine ebene Platte oder Walze, aufweisen, die aufeinander zu gedrückt werden können, um dem noch weichen Halbzeug eine gewünschte Formgestaltung und/oder Oberflächengüte aufzuprägen. Vorzugsweise wird durch die Presswerkzeuge kein Vorschub auf das Halbzeug aufgeprägt, so dass der Vorschub in Förderrichtung durch das Glättwerk hindurch in der Anfahrphase im Wesentlichen ausschließlich mit Hilfe des Fördergurts erreicht wird. Insbesondere kann das Glättwerk den Fördergurt an das Halbzeug anpressen, wodurch der Verbund des Halbzeugs mit dem Fördergurt und/oder mit dem dazwischen vorgesehenen Vlies verbessert werden kann.

Das Halbzeug kann nach einem Abkühlen und Verfestigen zu einem Endlosprofil einer Kantenschneideinrichtung zum Abtrennen eines zur Förderrichtung seitlichen Randbereichs des Halbzeugs zugeführt werden, so dass in Förderrichtung nach der Kantenschneideinrichtung das Halbzeug als plattenförmiges Endlosprofil mit einer quer zur Förderrichtung verlaufenden vordefinierten Grundplattenbreite vorliegt, wobei die in der Kantenschneideinrichtung abgetrennten Randbereiche als Ausschuss abgesondert werden. Gegebenenfalls können die abgetrennten Randbereiche zerkleinert werden, so dass die zerkleinerten Randbereiche, insbesondere als schüttfähiges Granulat, leicht weitertransportiert werden kann. Die Weiterverarbeitung, insbesondere das Recycling, der abgetrennten Randbereiche ist dadurch vereinfacht.

Die Kantenschneideeinrichtung kann die über die über die gewünschte Grundplattenbreite hinausgehenden Randbereiche insbesondere kontinuierlich abtrennen. Hierzu kann das Halbzeug beispielsweise gegen ein feststehendes Messer oder Schneidrolle anlaufen. Das Abtrennen der Randbereiche erfolgt insbesondere durch ein spanloses Trennverfahren, insbesondere Abscheren an einer Messerschneide, so dass abgetrennte Späne, welche die Kantenschneideeinrichtung verschmutzen und beeinträchtigen könnten oder die Oberflächen des Endlosprofils beeinträchtigen, vermieden sind. Hierbei wird die Erkenntnis ausgenutzt, dass das Halbzeug im optimalen Temperaturbereich vergleichsweise weich und duktil vorliegt, so dass ein verschleißarmes Abtrennen der Randbereiche durch ein spanloses Abscheren leicht durchgeführt werden kann. Zudem ist es möglich die abgetrennten Randbereiche als streifenförmiges Endlosprofil abzutrennen, die nachfolgend in Teilstücke gleichartiger Größe und Form, insbesondere als Granulat, zerkleinert werden können. Dies erleichtert die weitere Verarbeitung der abgetrennten Randbereiche.

Zwischen der Kantenschneideinrichtung und der Vereinzelungseinrichtung kann ausreichend Bauraum geschaffen werden, um die in der Kantenschneideinrichtung abgetrennten Randbereiche weiter zu verarbeiten. Hierzu kann der Bauraum zwischen der Kantenschneideinrichtung und der Vereinzelungseinrichtung unterhalb des Endlosprofils sowie der zur Förderung des Endlosprofils vorgesehenen Förderelemente der Förderrichtung vorgesehen werden. Die Weiterverarbeitung der abgetrennten Randbereiche kann sich dadurch unmittelbar an die Kantenschneideinrichtung anschließen, ohne dass hierzu ein Bauraum der Produktionsanlage quer zur Förderrichtung signifikant vergrößert werden müsste. Stattdessen kann die Weiterverarbeitung der abgetrennten Randbereiche in einer Aufstellfläche vorgesehen sein, die sowieso schon von der Fördereinrichtung genutzt wird, wobei für die Weiterverarbeitung der abgetrennten Randbereiche in einem von der Fördereinrichtung eher weniger genutzter Höhenbereich vorgesehen werden kann. Die Weiterverarbeitung der abgetrennten Randbereiche kann dadurch im Wesentlichen nahezu bauraumneutral erfolgen.

In Förderrichtung zwischen der Kantenschneideinrichtung und der Vereinzelungseinrichtung kann vorzugsweise ein Sammelbehälter zum Sammeln der in der Kantenschneideinrichtung abgetrennten Randbereiche angeordnet sein. Die als streifenförmiges Endlosprofil abgetrennten Randbereiche können vor dem Trennwerkzeug der Kantenschneideinrichtung noch mit dem Halbzeug verbunden sein, so dass die abgetrennten Randbereiche in Förderrichtung hinter dem Trennwerkzeug der Kantenschneideinrichtung nur leicht seitlich beabstandet zu dem Endlosprofil verlaufen können. Die abgetrennten Randbereiche können dadurch leicht dem zwischen der Kantenschneideinrichtung und der Vereinzelungseinrichtung vorgesehenen Sammelbehälter zugeführt werden, ohne dass die als streifenförmiges Endlosprofi abgetrennten Randbereiche unkontrolliert abbrechen können. Die abgetrennten Randbereiche können dadurch leicht kontinuierlich abgeführt und in dem Sammelbehälter gesammelt werden. Die als streifenförmiges Endlosprofil abgetrennten Randbereiche können in dem Sammelbehälter in kleinere Stücke zerbrechen oder vorher definiert zerkleinert werden. Vorzugsweise werden die abgetrennten Randbereiche in mindestens einer, insbesondere als Schneidmühle ausgestalteten, Zerkleinerungseinrichtung, insbesondere zu schüttfähigen Granulat, zerkleinert und als Granulat dem Sammelbehälter und/oder einem Recyclingbehälter zugeführt. Der Sammelbehälter kann insbesondere durch eine Relativbewegung quer zur Förderrichtung wegbewegt und durch einen noch leeren Sammelbehälter ersetzt werden, so dass die abgetrennten Randbereiche batch-weise weggebracht werden können. Vorzugsweise werden die abgetrennten Randbereiche kontinuierlich abgeführt.

Der Sammelbehälter kann insbesondere in Schwerkraftrichtung unterhalb des Endlosprofils angeordnet sein, wobei insbesondere das Endlosprofil den Sammelbehälter in Schwerkraftrichtung betrachtet zumindest zu einem Großteil überdeckt. Der Sammelbehälter kann auf einem hinreichend niedrigen Niveau zur Aufnahme der gegebenenfalls bereits zerkleinerten abgetrennten Randstreifen in zu dem Endlosprofil zumindest teilweise seitlich versetzt und/oder von dem Endlosprofil überdeckt unterhalb des Endlosprofils vorgesehen sein. Ein seitliches Überstehen des Sammelbehälters über die seitliche Erstreckung des Endlosprofils hinaus kann dadurch gering gehalten oder sogar ganz vermieden werden. Der Bauraumbedarf kann dadurch minimiert werden. Zudem ist es leicht möglich den Sammelbehälter nach oben hin offen auszugestalten, so dass durch eine Sichtprüfung leicht erkannt werden kann, ob der Sammelbehälter durch einen leeren Sammelbehälter ausgetauscht werden sollte. Die oberhalb des Sammelbehälters vorgesehenen Bauteile der Fördereinrichtung, insbesondere Rollen, und/oder das Material des Endlosprofils können die nach oben offene Öffnung des Sammelbehälters überdecken und aus dem Inneren des Sammelbehälters hochspringende abgebrochene Stücke des abgetrennten Randbereichs zurückhalten.

Insbesondere übt die Fördereinrichtung nur in einem der Vereinzelungseinrichtung zugewandten Teilbereich eine Zugkraft in Förderrichtung auf das Halbzeug aus. Grundsätzlich ist es möglich, dass die auf das Halbzeug ausgeübte Zugkraft im kontinuierlichen Normalbetrieb nach dem Ablauf der Anfahrphase ausschließlich von der Vereinzelungseinrichtung ausgeübt wird. Falls die Zugkraft auf das Halbzeug zusätzlich oder alternativ zu der Vereinzelungseinrichtung von der Fördereinrichtung bereitgestellt wird, beispielsweise um das zu einem Endlosgrundprofil abgekühlte und verfestigte Halbzeug zumindest anteilig mit einer Druckkraft in die Vereinzelungseinrichtung hineinzudrücken, ist es ausreichend, wenn nur in einem Teilbereich aktiv angetriebene Förderelemente vorgesehen sind. Hierbei sind die aktiv angetriebene Förderelemente an dem zur Vereinzelungseinrichtung weisenden Ende der Fördereinrichtung vorgesehen, insbesondere in Form eine aktiv angetriebene Rollen aufweisenden Abzugseinrichtung, so dass, insbesondere über einen Großteil der Erstreckung der Fördereinrichtung in Förderrichtung, zwischen dem Extruder und/oder dem Kalander einerseits und dem Teilbereich mit den aktiv abgetriebenen Förderelementen nur passiv mitlaufende Förderelemente vorgesehen sein können. Dadurch lassen sich durch Wärmedehnungseffekte verursachte Stauchungen und Dehnungen im Material des Halbzeugs während eines Abkühlens auf der Fördereinrichtung vermeiden. Zudem kann die Fördereinrichtung besonders kostengünstig ausgestaltet sein.

Die Fördereinrichtung und/oder ein aktiv angetriebenes Förderelement der Vereinzelungseinrichtung stellt insbesondere eine Fördergeschwindigkeit vi von 4,5 m/min ≤ vi ≤ 21,0 m/min, insbesondere 5,0 m/min ≤ vi ≤ 8,0 m/min und vorzugsweise vi = 5,5 m/min ± 0,5 m/min oder vi = 7,5 m/min ± 0,5 m/min bereit. Diese Fördergeschwindigkeit ermöglicht eine hohe Produktivität ohne in das Halbzeug unnötige innere Spannungen zu induzieren. Zusätzlich oder alternativ ist die Fördergeschwindigkeit vi derart eingestellt, dass bei einer vorgegebenen Dicke und einer vorgegeben Grundplattenbreite der herzustellenden Platten ein bestimmter, insbesondere im Wesentlichen konstanter, Extruderdurchsatz, beispielsweise 6000 kg/h oder 8500 kg/h, erreicht wird. Die Fördergeschwindigkeit vi kann dadurch an den von dem Extruder bereitstellbaren maximalen Extruderdurchsatz angepasst sein, wodurch eine besonders hohe Produktivität erreicht wird.

Vorzugsweise wird an dem von der Vereinzelungseinrichtung abgewandten Ende der Fördereinrichtung von einem Extruder und/oder einem Kalander eine Druckkraft in Förderrichtung auf das Halbzeug ausgeübt. Die beim Extrudieren und/oder im Kalander sowieso aufgebrachte Druckkraft kann dadurch zum Anschieben des Extrudats beziehungsweise des Halbzeugs entlang der Fördereinrichtung genutzt werden, ohne dass hierzu ein aktiv angetriebenes Förderelement der Fördereinrichtung erforderlich ist. Die Fördereinrichtung kann dadurch besonders kostengünstig ausgestaltet sein.

Insbesondere wird das freie Ende des Halbzeugs am Ausgang eines Extruders in einem im Wesentlichen schmelzförmigen Zustand auf den, insbesondere zu einem Kalander führenden, Fördergurt gedrückt, wobei insbesondere zwischen dem Halbzeug und dem Fördergurt ein Vlies für den Verbund des Halbzeugs mit dem Fördergurt vorgesehen ist. Dadurch kann das noch schmelzförmige Extrudat in der Anfahrphase unmittelbar am Ausgang des Extruders auf den Fördergurt auftreffen, der das noch sehr weiche Extrudat zu einem Kalander ziehen kann. der Extruder und der Kalander können dadurch in horizontaler Richtung hintereinander, insbesondere auf einem im Wesentlichen gemeinsamen Höhenniveau, vorgesehen sein, so dass das Halbzeug ausschließlich in horizontaler Richtung durch die Produktionsanlage bewegt werden kann. Es ist nicht erforderlich den Extruder in Schwerkraftrichtung oberhalb des Kalanders vorzusehen und das Extrudat schwerkraftgetrieben von dem Extruder zu dem Kalander zu fördern. Eine 90°-Umlenkung des Halbzeugs von einer vertikalen Richtung in eine horizontale Richtung ist vermieden. Dadurch ist der vertikale Bauraumbedarf der Produktionsanlage gering gehalten und die Formgenauigkeit und Qualität des Endlosprofils verbessert. Damit das sehr weiche Extrudat nicht wegfließen kann und ein vergleichsweise schmaler Fördergurt ausreicht, kann zwischen dem aus dem Extruder austretenden schmelzförmigen Halbzeug und dem Fördergurt das Vlies vorgesehen sein, deren Breite senkrecht zur Förderrichtung im Wesentlichen der Breite des Endlosprofils entsprechen kann, wobei das Vlies durchaus etwas breiter oder etwas schmäler als die Breite des Endlosprofils sein kann, beispielsweise um ± 5 cm. Zudem kann das Vlies ein späteres Abziehen des Fördergurts von dem Halbzeug erleichtern. Das Vlies kann insbesondere offenporig und/oder anderweitig aufgeraut ausgestaltet sein, so dass das Vlies einen guten Verbund mit dem noch sehr weichen Halbzeug eingehen kann und einen guten Reibschluss mit dem Fördergurt bereitstellen kann.

Besonders bevorzugt wird der Fördergurt im Wesentlichen mit einer für den kontinuierlichen Normalbetrieb vorgesehenen Fördergeschwindigkeit, insbesondere motorisch und/oder händisch, gezogen. Unnötige Stauchungen und Dehnungen des Halbzeugs in der Anfahrphase werden dadurch vermieden. Zudem liegen dadurch in der Anfahrphase im Vergleich zum kontinuierlichen Normalbetrieb vergleichbare Temperaturverhältnisse und/oder Abkühlungsbedingungen vor, so dass das freie Ende des Halbzeugs vergleichsweise einfach der Vereinzelungseinrichtung zugeführt werden kann. Es kann sichergestellt werden, dass das in der Anfahrphase der Vereinzelungseinrichtung zugeführte Halbzeug nicht zu warm und zu weich aber auch nicht zu kalt und zu hart ist. Insbesondere ist es möglich eine durch eine zu geringe Fördergeschwindigkeit verursachte Verdickung des Halbzeugs zu vermeiden, die das Abtrennen von Platten in der Vereinzelungseinrichtung erschweren oder vereiteln könnte. Außerdem können durch eine zu schnelle Fördergeschwindigkeit verursachte Einschnürungen in dem noch weichen Halbzeug vermieden werden, aufgrund dessen das Halbzeug in der Anfahrphase, insbesondere beim Einfädeln in die Vereinzelungseinrichtung, durchbrechen könnte. Das Risiko in der Anfahrphase Betriebsstörung zu verursachen ist dadurch vermieden oder zumindest reduziert.

Insbesondere ist vorgesehen, dass nur genau ein Fördergurt verwendet wird oder die Bewegung in Förderrichtung von mehreren vorgesehenen Fördergurten miteinander zwangsgekoppelt sind. Dadurch kann eine über die quer zur Förderrichtung verlaufende Breite des Halbzeugs verschiedene lokale Fördergeschwindigkeit vermieden werden. Ein Verziehen oder seitliches Weglaufen des Halbzeugs von der Fördereinrichtung ist dadurch vermieden, so dass unnötige Schwierigkeiten das freie Ende des zu dem Endlosgrundprofil verfestigten Halbzeugs der Vereinzelungseinrichtung zuzuführen vermieden sind.

Vorzugsweise weist der Fördergurt ein zur Vereinzelungseinrichtung weisendes Zugende und ein von dem Zugende weg weisendes loses Ende auf, wobei eine Erstreckung s des Fördergurts zwischen dem Zugende und dem losen Ende mindestens einer Erstreckung l der Fördereinrichtung zwischen einen Auftrittspunkts des freien Endes des Halbzeugs auf der Fördereinrichtung und der Vereinzelungseinrichtung beträgt, wobei insbesondere 1,0 < s/l ≤ 2,0, vorzugsweise 1,1 ≤ s/l ≤ 1,8 und besonders bevorzugt 1,3 ≤ s/l ≤ 1,5 gilt. Das Zugende des Fördergurts kann an dem zur Vereinzelungseinrichtung weisenden Ende der Fördereinrichtung etwas abstehen, um besser die Zugkraft in den Fördergurt einleiten zu können. Die Zugkraft kann hierbei maschinell, beispielsweise mit Hilfe eines Motors, oder von Hand aufgeprägt werden. Das lose Ende des Fördergurts kann an dem zum Extruder weisenden Ende der Fördereinrichtung vorgesehen sein, so dass das freie Ende des erstmalig auf die Fördereinrichtung auftreffenden Halbzeugs auf die Oberseite des Fördergurts auftrifft. Grundsätzlich kann ein geringes Überlappen zwischen dem Fördergurt und dem Halbzeug in der Anfahrphase ausreichend sein, insbesondere um die Anfahrphase nach dem Einfädeln des freien Endes des Halbzeugs in die Vereinzelungseinrichtung möglichst schnell beenden zu können und in den kontinuierlichen Normalbetrieb überzugehen. Um ein Losreißen des Fördergurts von dem Halbzeug beim Ziehen des Halbzeugs mit Hilfe des Fördergurts sicher zu vermeiden, kann jedoch ein größeres Überlappen zwischen dem Fördergurt und dem Halbzeug in Förderrichtung vorgesehen sein, um einen besseren Verbund zwischen dem Fördergurt und dem Halbzeug zu erreichen. Dies ermöglicht es gleichzeitig die Breite des Fördergurts quer zur Förderrichtung klein zu halten und dennoch einen guten Verbund mit dem Halbzeug zu erreichen, wodurch die Handhabung und die Lagerung des Fördergurts vereinfacht sind.

Besonders bevorzugt gilt für eine Gesamtbreite b des mindestens einen Fördergurts quer zur Förderrichtung bei einer durchschnittlichen Breite B des Halbzeugs beim Auftreffen auf der Fördereinrichtung 0,01 ≤ b/B ≤ 0,90, insbesondere 0,05 ≤ b/B ≤ 0,50, vorzugsweise 0, 10 ≤ b/B ≤ 0,25 und besonders bevorzugt 0,15 ≤ b/B ≤ 0,20. Es wurde erkannt, dass es in der Anfahrphase nicht erforderlich ist über die gesamte Breite des Halbzeugs die Zugkraft angreifen zu lassen und es bereits ausreicht, wenn der Fördergurt im Vergleich zur Breite des Halbzeugs schmal ausgeführt ist. Insbesondere wenn zwischen dem Extruder und der Fördereinrichtung ein Kalander vorgesehen ist, weist das Material des Halbzeugs eine hinreichende Festigkeit auf, dass gegebenenfalls durch den Fördergurt eingeleitete Verformungen des Halbzeugs so gering sind, dass die Verformungen über die Erstreckung der Fördereinrichtung und auch in der Vereinzelungseinrichtung nicht zu Schwierigkeiten führen. Die Kosten für den Fördergurt und die Lagerhaltung für den Fördergurt können dadurch gering gehalten werden.

Insbesondere wird der Fördergurt zumindest teilweise in das Material des Halbzeugs eingedrückt. Das beim Auftreffen auf den Fördergurt beziehungsweise auf dem zwischen dem Halbzeug und dem Fördergurt vorgesehene Vlies noch weiche Material des Halbzeugs kann aufgrund seines Eigengewichts sich an seiner zum Fördergurt weisenden Unterseite an die Form des Fördergurts anpassen. Das Material des Halbzeugs kann an den quer zur Förderrichtung weisenden Seiten des Fördergurts vorbei an eine Oberseite der Fördereinrichtung gelangen. Dadurch ist der Verbund des Fördergurts mit dem Halbzeug verbessert.

Vorzugsweise ist der Fördergurt aus einem textilen Material hergestellt, wobei das textile Material an einer Oberseite und/oder eine Unterseite des Fördergurts mit einer Trennschicht zur Bereitstellung einer Abtrennbarkeit des Fördergurts von dem Halbzeug versehen ist. Die Trennschicht kann beispielsweise als eine, insbesondere aufgesprühte, Beschichtung oder separate, beispielsweise aufgeklebte, Materiallage ausgestaltet sein. Durch das textile Material kann der Fördergurt eine besonders hohe Zugfestigkeit aufweisen. Zudem kann sich durch das textile Material eine bewusst ungleichmäßige Oberflächenstruktur ergeben, die den Verbund mit dem Halbzeug verbessert. Durch die Trennschicht kann ein Festkleben des Fördergurts an dem Halbzeug, beispielsweise durch Adhäsion oder chemische Bindungen, vermieden werden, so dass sich der Fördergurt leicht von dem verfestigten Halbzeug abziehen lässt. Beispielsweise kann der Fördergurt scharfkantig von der Unterseite des Halbzeugs kurz vor der Vereinzelungseinrichtung leicht abgezogen werden.

Besonders bevorzugt weist die Fördereinrichtung mindestens eine aktiv angetriebene Rolle, die insbesondere Teil einer Abzugseinrichtung zur Bereitstellung einer Zugkraft an dem Halbzeug ist, auf, wobei der Fördergurt an einer aktiv angetriebenen Rolle entlang abgezogen wird. Der Fördergurt kann von der aktiv angetriebenen Rolle beispielsweise um ca. 90° oder sogar mehr von der Unterseite des Halbzeugs abgezogen werden. Hierbei kann die aktiv angetriebenen Rolle nicht nur das Halbzeug in die Vereinzelungseinrichtung drücken, sondern auch eine Kraft auf den Fördergurt ausüben, um das Abziehen des Fördergurts von dem Halbzeug zu unterstützen. Wenn eine Bedienperson den Fördergurt abziehen will, kann er den Fördergurt an der aktiv angetriebenen Rolle entlangziehen, wodurch das Abziehen des Fördergurts vereinfacht wird.

Insbesondere wird der Fördergurt vor einem Kontakt mit dem Halbzeug auf eine vordefinierte Betriebstemperatur temperiert. Dadurch kann ein Verbund des Fördergurts mit dem Halbzeug erleichtert werden. Beispielsweise kann der Fördergurt auf eine Temperatur vorgewärmt sein, bei welcher der Fördergurt leicht in das noch nicht verfestigte Material des Halbzeugs eingedrückt werden kann. Alternativ kann es bereits ausreichend sein, wenn der Fördergurt mit Umgebungstemperatur zugeführt wird.

Vorzugsweise wird derjenige sich in Förderrichtung erstreckende Anteil des Halbzeugs, der in Kontakt mit dem Fördergurt war, nach dem Abtrennen als Platten in der Vereinzelungseinrichtung als Ausschuss abgesondert. Es ist nicht auszuschließen, dass die Oberfläche des Halbzeugs, die in Kontakt mit dem Fördergurt war, nicht die beabsichtigte Oberflächengüte aufweist. Daher kann dieser Anteil des Halbzeugs als Ausschuss abgesondert werden und wird nicht als Produkt verarbeitet. Eine Prüfung von Materialeigenschaften ist hierbei nicht erforderlich, so dass die Bestimmung der abgetrennten Platten als Ausschuss vereinfacht und kostengünstig ist.

Insbesondere wird der Fördergurt mit einer Fördergeschwindigkeit vi von 4,5 m/min ≤ vi ≤ 21,0 m/s, insbesondere 5,0 m/min ≤ vi ≤ 8,0 m/min und vorzugsweise vi = 5,5 m/s ± 0,5 m/min oder vi = 7,5 m/s ± 0,5 m/min gezogen. Der Fördergurt und das von dem Fördergurt gezogene Halbzeug können dadurch auch während der Anfahrphase bereits mit der Fördergeschwindigkeit bewegt werden, die je nach vorgesehenem Produkt für die vereinzelten Platten bereits im Wesentlichen der im kontinuierlichen Normalbetrieb vorgesehenen Fördergeschwindigkeit entspricht.

Besonders bevorzugt wird der Fördergurt zerstörungsfrei von dem Halbzeug abgezogen. Eine Beschädigung des Fördergurts sowie ein Durchbrechen des verfestigten Halbzeugs ist dadurch vermieden. Hierzu kann der Fördergurt insbesondere scharfkantig von der Unterseite des Halbzeugs mit einem Bewegungsanteil in Schwerkraftrichtung nach unten abgezogen werden. Der Fördergurt kann dadurch leicht wiederverwendet und recycelt werden. Es ist sogar möglich, dass eine Reinigung des Fördergurts nicht erforderlich ist, um den Fördergurt bei einer erneut auftretenden Anfahrphase wiederzuverwenden.

Insbesondere wird der abgezogene Fördergurt für eine erneute Durchführung des Verfahrens wiederverwendet, das wie vorstehend beschrieben aus- und weitergebildet sein kann. Besonders bevorzugt wird der abgezogene Fördergurt nicht nur einmal, sondern mehrmals, vorzugsweise immer wieder, für die erneute Durchführung des Verfahrens wiederverwendet. Da der Fördergurt nur in der Anfahrphase der Produktionsanlage verwendet wird, kann die Lebensdauer des Fördergurts größer als die Lebensdauer der Produktionsanlage sein, so dass es insbesondere möglich ist den Fördergurt für sämtliche bei der Produktionsanlage auftretenden Anfahrphasen gemäß des vorstehend beschrieben Verfahrens wiederzuverwenden. Es wird davon ausgegangen, dass ein über übliche Alterungseffekte hinausgehender signifikanter Verschleiß des Fördergurts grundsätzlich nicht zu erwarten ist. Solange der Verschleißzustand des Fördergurts und/oder der Produktionsanlage das zulässt, kann der selbe Fördergurt immer wieder bei den bei der Produktionsanlage auftretenden Anfahrphasen gemäß des vorstehend beschrieben Verfahrens wiederverwendet werden.

Vorzugsweise ist für eine Abkühlung des Endlosgrundprofil zwischen dem Extruder und/oder dem Kalander und der Vereinzelungseinrichtung ausschließlich eine Abkühlung durch Konvektion, insbesondere ausschließlich natürliche Konvektion, vorgesehen. Der Aufwand für eine aktive Kühlung, insbesondere mit Hilfe eines zusätzlichen Kühlmittels, ist dadurch vermieden und eingespart. Zudem können innere Spannungen durch eine zu starke Abkühlung vermieden werden.

Besonders bevorzugt ist in Förderrichtung hinter der Vereinzelungseinrichtung eine Trenneinrichtung zum, insbesondere spanlosen, Zerteilen der Platte in einzelne Paneele, insbesondere entlang mindestens einer in Förderrichtung verlaufenden Trennlinie, vorgesehen. Dadurch kann das Zerteilen der Platte in Paneele, beziehungsweise in für die Herstellung von Paneelen vorgesehene Paneelkörper, in einem Temperaturbereich stattfinden, der noch im optimalen Temperaturbereich liegt oder leicht darunter liegt. Da die Trenneinrichtung kein Endlosprofil, sondern bereits vereinzelte Platten, vorzugsweise spanlos, bearbeitet, kann auch bei einer niedrigeren Temperatur ein gutes Schnittergebnis mit ebenen Schnittflächen erreicht werden. Statt eines kontinuierlichen Trennens kann die Trenneinrichtung ein batch-artiges Trennen mit Hilfe mindestens eines Messers vorsehen, wobei es aufgrund der geringeren Temperatur leicht möglich ist, die zu trennenden Paneele mit Hilfe mindestens einen Niederhalters anzudrücken, ohne dass eine wellenartige Verformung der Platte und der abzutrennenden Paneele zu befürchten ist. Das Trennen in der Trenneinrichtung kann dadurch mit einer hohen Präzision und einer guten Schnittgüte erfolgen.

Die vereinzelten Platten und/oder Paneele können zum Ende der Fördereinrichtung hin in einer Verpackungseinrichtung, vorzugsweise auf einer Palette, aufgestapelt werden. Die aufgestapelten Platten und/oder Paneele können, insbesondere nach einem Abkühlen auf Umgebungstemperatur einer weiteren, insbesondere spanenden, Bearbeitung zugeführt werden, beispielsweise um in den die Oberseite mit der Unterseite verbindenden Seitenflächen einen Spund-Ansatz, eine Spund-Nut, einen Arretierhaken oder einen Federkörper auszuformen.

Nachfolgend wird die Erfindung unter Bezugnahme auf die anliegenden Zeichnungen anhand bevorzugter Ausführungsbeispiele exemplarisch erläutert, wobei die nachfolgend dargestellten Merkmale sowohl jeweils einzeln als auch in Kombination einen Aspekt der Erfindung darstellen können. Es zeigen:
Fig. 1: eine schematische Prinzipdarstellung einer Produktionsanlage und
Fig. 2: eine schematische Draufsicht auf einen Teil der Produktionsanlage aus Fig. 1 während einer Anfahrphase.

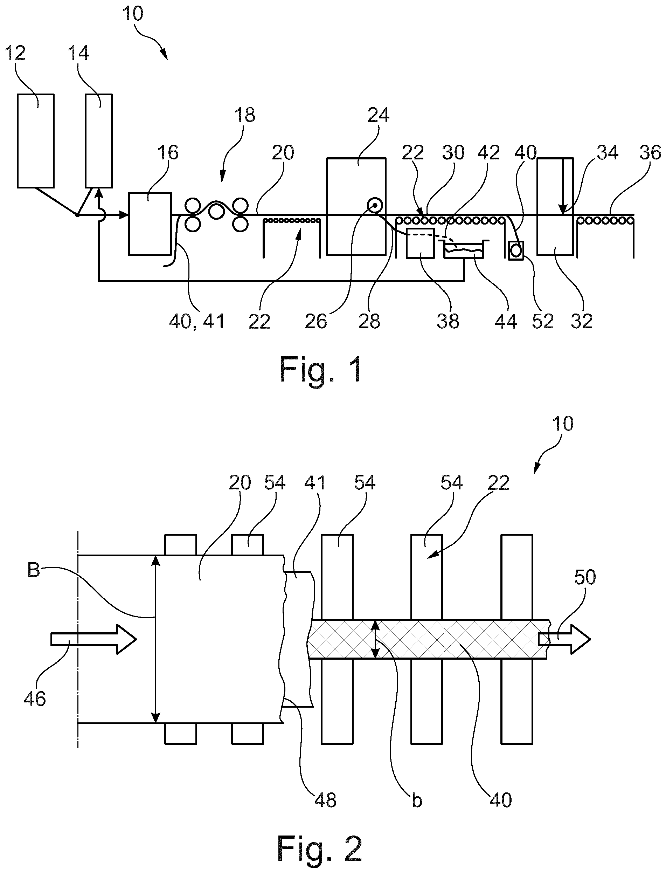

Die in Fig. 1 dargestellte Produktionsanlage 10 weist einen Vorlagebehälter 12 und einen Recyclingbehälter 14 auf, aus denen mindestens ein Extruder 16 mit einem zu extrudierenden Edukt beaufschlagt werden kann. Der Extruder 16 kann das Edukt über eine Breitschlitzdüse als Extrudat einem Kalander 18 zuführen, so dass nach dem Kalander ein als plattenförmiges Endlosprofil ausgestaltetes Halbzeug 20 vorliegt, das von einer Fördereinrichtung 22 in Förderrichtung mit einer bestimmten Fördergeschwindigkeit abgeführt wird. Hierbei kann das Halbzeug 20, insbesondere durch natürliche Konvektion, während der Förderung abgekühlt werden, wobei die lokale Fördergeschwindigkeit der Fördereinrichtung 22 derart angepasst sein kann, dass Wärmedehnungseffekte durch eine Schrumpfung des Materials des Halbzeugs 20 kompensiert werden können. Das Halbzeug 20 kann von der Fördereinrichtung 22 gegebenenfalls einem Glättwerk zum Glätten einer Oberseite und/oder einer Unterseite des Halbzeugs 20 mit einer definierten Oberflächengüte zugeführt werden. Nach dem gegebenenfalls vorgesehenen Glätten wird das Halbzeug 20 von der Fördereinrichtung 22 einer Kantenschneideinrichtung 24 zugeführt, die insbesondere mit Hilfe eines Rollmessers 26 Randstreifen 28 abtrennt, so dass auf der Fördereinrichtung 22 ein Endlosgrundprofil 30 mit begradigten Seitenkanten und einer definierten Grundplattenbreite quer zur Förderrichtung verbleibt. Das Endlosgrundprofil 30 wird nachfolgend einer Vereinzelungseinrichtung 32 zugeführt, die insbesondere mit Hilfe eines in Förderrichtung mitbewegten Guillotine-Messers 34 vereinzelte Platten 36 abtrennt, die als Produkt einer Weiterverarbeitung zugeführt werden können. Die Durchschnittstemperatur des Halbzeugs 20 in der Kantenschneideinrichtung 24 und die Durchschnittstemperatur des Endlosgrundprofils 30 in der Vereinzelungseinrichtung 32 liegen beide innerhalb eines vergleichsweise engen optimalen Temperaturbereichs, in dem das Material des Halbzeugs 20 und des Endlosgrundprofils 30 noch warm genug ist, dass aufgrund der noch vorliegenden Duktilität ein mechanischer Widerstand gegen ein Eindringen eines Trennwerkzeugs gering ist, aber bereits hart genug ist, dass das Material nicht an dem Trennwerkzeug kleben bleibt oder sich unter der beim Trennen auftretenden Scherbelastung zu stark verformt.

Die als streifenförmiges Endlosprofile abgetrennten Randbereiche 28 werden einer zugeordneten Zerkleinerungseinrichtung 38 zugeführt, in der die Randbereiche 28 in im Wesentlichen gleich große Randstücke 42 zerkleinert und einem Sammelbehälter 44 zugeführt werden können. Die Zerkleinerungseinrichtung 38 und der Sammelbehälter 44 sind zwischen der Vereinzelungseinrichtung 32 und der Kantenschneideinrichtung 24 auf einem Höhenniveau unterhalb der Höhe des Endlosgrundprofils 30 vorgesehen. Aus dem Sammelbehälter 44 können die Randstücke 42, beispielsweise mit Hilfe einer Rückfördereinrichtung, dem Recyclingbehälter 14 zugeführt und wiederverwendet werden. Zusätzlich oder alternativ können die abgetrennten und insbesondere gemahlenen Randstücke 42 einem von dem Recyclingbehälter 14 verschiedenen Behälter zugeführt und über eine Dosiereinrichtung dem Extruder 16 als Edukt, vorzugsweise kontinuierlich, zugeführt werden.

Wenn die Produktionsanlage 10 angefahren wird, ist auf der Fördereinrichtung 20 noch kein Halbzeug 20 platziert und in der Vereinzelungseinrichtung 32 noch kein Endlosgrundprofil 30 eingefädelt. Um das in der Anfahrphase erstmalig auf der Fördereinrichtung 22 ankommende Halbzeug 20 leicht der Vereinzelungseinrichtung 32 zuführen zu können und in den kontinuierlichen Normalbetrieb wechseln zu können, ist nur für die Anfahrphase ein Fördergurt 40 vorgesehen, der sich zu Beginn der Anfahrphase über die gesamte Erstreckung der Fördereinrichtung 22 in Förderrichtung erstreckt. Der Fördergurt 40 kann zusammen mit einem zwischen dem Fördergurt 40 und dem Halbzeug 20 vorgesehenen Vlies 41 am Ausgang des Extruders 16 und noch vor dem Kalander 18 und einem Glättwerk zugeführt werden, so dass das den Extruders 16 als noch schmezförmiges Extrudat verlassene Halbzeug 20 mit Hilfe des Fördergurts 40 und des Vlies 41 in horizontaler Richtung in den Kalander 18 gezogen werden kann.

Wie in Fig. 2 dargestellt ist, kann ein aus dem Extruder 16 mit einer Druckkraft 46 auf den Kalander 18 zu gedrücktes freies Ende 48 des Halbzeugs 20 auf den Fördergurt 40 und das Vlies 41 auftreffen, wobei zumindest der Fördergurt 40 hinter dem Kalander 18 auf der Fördereinrichtung 22 aufgelegt ist. An einem zur Vereinzelungseinrichtung 32 weisenden Zugende des Fördergurts 40 kann mit Hilfe einer aktiv angetriebene Rollen aufweisenden Abzugseinrichtung der Fördereinrichtung 22 eine Zugkraft 50 in den Fördergurt 40 eingeleitet werde, um das freie Ende 48 des Halbzeugs 22 und das nachfolgende Material des Halbzeugs 20 abziehen zu können. Die Zugkraft 50 kann aber auch händisch oder beispielsweise mit Hilfe einer elektromotorisch angetriebenen Wickelmaschine 50 zum automatischen Aufwickeln des Fördergurts 40 aufgebracht werden. Durch den Verbund des Fördergurts 40 mit dem Halbzeug 20 über das Vlies 41 kann das Halbzeug 20 in der Anfahrphase von dem Fördergurt 40 über die Fördereinrichtung 22, insbesondere über einen passiv mitdrehende Rollen 54 aufweisenden Teilbereich der Fördereinrichtung 22, auf die Vereinzelungseinrichtung 32 zu gezogen werden. Hierbei kann die Breite b des Fördergurts 40 deutlich geringer als die durchschnittliche Breite B des Halbzeugs 20 sein, während eine Breite des Vlies 41 grob der durchschnittlichen Breite B des Halbzeugs 20 entsprechen kann. Wenn das freie Ende 48 des Halbzeugs 20 mit der Unterstützung des Fördergurts 40 an der Vereinzelungseinrichtung 32 angekommen ist, ist das Halbzeug 20 zwischenzeitlich soweit abgekühlt und verfestigt, dass der Fördergurt zwischen der Fördereinrichtung 22 und der Vereinzelungseinrichtung 32, insbesondere scharfkantig, nach unten von dem zum Endlosgrundprofil 30 verfestigten Halbzeug 20 abgezogen werden kann. Das freie Ende 48 kann hierbei in Förderrichtung hinter einer Abzugseinrichtung mit aktiv angetriebenen Rollen und vor der Vereinzelungseinrichtung 32 abgezogen werden. Das freie Ende 48 des Endlosgrundprofils 30 kann dann ohne den Fördergurt 40 der Vereinzelungseinrichtung 32 zugeführt werden, womit grundsätzlich der kontinuierliche Normalbetrieb beginnen kann.

Das Vlies 41 kann an dem Endlosgrundprofil 30 haften bleiben oder vergleichbar zu dem Fördergurt 40 ebenfalls von dem Endlosgrundprofil 30 abgezogen werden. Eine sicherheitshalber noch verbliebene Restlänge des Fördergurts 40 kann noch weiterhin abgezogen werden, bis der Fördergurt 40 vollständig von dem Halbzeug 20 abgelöst ist und weggeschafft werden kann. In der Regel würde man mit dem Normalbetrieb noch etwas abwarten bis alle relevanten Prozessparameter in einem für den Normalbetrieb vorgesehenen Sollbereich liegen und eine gleichbleibend hohe Produktqualität im kontinuierlichen Normalbetrieb sichergestellt werden kann, insbesondere eine Welligkeit der abgetrennten Platten 36 in einem vorgesehenen Toleranzbereich liegt. Die Platten 36, die in Kontakt mit dem Fördergurt 40 waren und in dessen Material sich der Fördergurt 40 hat eindrücken können, können ohne genauere aufwändige Prüfung als Ausschuss abgesondert und vorzugsweise zerkleinert und in den Recyclingbehälter 14 rückgeführt werden. Das Erkennen der abzusondernden Platten 36 als Ausschuss wird zusätzlich vereinfacht, wenn das Vlies 41 an den abzusondernden Platten 36 befestigt verbleibt.

## Patentansprüche

1. Verfahren zum Anfahren einer Produktionsanlage (10) zur Herstellung extrudierter Platten (36), insbesondere für Paneele zur Abdeckung einer Oberfläche eines Raums, bei dem
ein extrudiertes Halbzeug (20) mit einem freien Ende (48) auf eine Fördereinrichtung (22) zu gedrückt wird,
wobei die Fördereinrichtung (22) ausgestaltet ist das Halbzeug (20) zu einer Vereinzelungseinrichtung (32) zum Abtrennen von vereinzelten Platten (36) von dem zu einem Endlosgrundprofil (30) abgekühlten und verfestigten Halbzeug (20), insbesondere entlang einer quer zur Förderrichtung verlaufenden Trennlinie, zu ziehen,
wobei ein sich in Förderrichtung erstreckender Fördergurt (40) auf der Fördereinrichtung (22) aufgelegt wird,
das freie Ende (48) des Halbzeugs (20) auf den Fördergurt (40) gedrückt wird,
der Fördergurt (40) zusammen mit dem Halbzeug (20) auf die Vereinzelungseinrichtung (32) zu gezogen wird und
das an der Vereinzelungseinrichtung (32) ankommende freie Ende (48) des Halbzeugs in die Vereinzelungseinrichtung (32) eingeführt wird, während der Fördergurt (40) vor der Vereinzelungseinrichtung (32) von dem Halbzeug (20) weg, insbesondere nach unten, abgezogen wird.

2. Verfahren nach Anspruch 1 bei dem die Fördereinrichtung (22) nur in einem der Vereinzelungseinrichtung (32) zugewandten Teilbereich eine Zugkraft (50) in Förderrichtung auf das Halbzeug (20) ausübt.

3. Verfahren nach Anspruch 1 oder 2 bei dem an dem von der Vereinzelungseinrichtung (32) abgewandten Ende der Fördereinrichtung (22) von einem Extruder (16) und/oder einem Kalander (18) eine Druckkraft (46) in Förderrichtung auf das Halbzeug (20) ausgeübt wird.

4. Verfahren nach einem der Ansprüche 1 bis 3 bei dem das freie Ende (48) des Halbzeugs (20) am Ausgang eines Extruders (16) in einem im Wesentlichen schmelzförmigen Zustand auf den, insbesondere zu einem Kalander (18) führenden, Fördergurt (40) gedrückt wird, wobei insbesondere zwischen dem Halbzeug (20) und dem Fördergurt (40) ein Vlies (41) für den Verbund des Halbzeugs (20) mit dem Fördergurt (40) vorgesehen ist.

5. Verfahren nach einem der Ansprüche 1 bis 4 bei dem der Fördergurt (40) im Wesentlichen mit einer für den kontinuierlichen Normalbetrieb vorgesehenen Fördergeschwindigkeit, insbesondere motorisch und/oder händisch, gezogen wird.

6. Verfahren nach einem der Ansprüche 1 bis 5 bei dem nur genau ein Fördergurt (40) verwendet wird oder die Bewegung in Förderrichtung von mehreren vorgesehenen Fördergurten (40) miteinander zwangsgekoppelt sind.

7. Verfahren nach einem der Ansprüche 1 bis 6 bei dem der Fördergurt (40) ein zur Vereinzelungseinrichtung (32) weisendes Zugende und ein von dem Zugende weg weisendes loses Ende aufweist, wobei eine Erstreckung s des Fördergurts (40) zwischen dem Zugende und dem losen Ende mindestens einer Erstreckung l der Fördereinrichtung (22) zwischen einen Auftrittspunkts des freien Endes (48) des Halbzeugs (20) auf der Fördereinrichtung (22) und der Vereinzelungseinrichtung (32) beträgt, wobei insbesondere 1,0 < s/l ≤ 2,0, vorzugsweise 1,1 ≤ s/l ≤ 1,8 und besonders bevorzugt 1,3 ≤ s/l ≤ 1,5 gilt.

8. Verfahren nach einem der Ansprüche 1 bis 7 bei dem für eine Gesamtbreite b des mindestens einen Fördergurts (40) quer zur Förderrichtung bei einer durchschnittlichen Breite B des Halbzeugs (20) beim Auftreffen auf der Fördereinrichtung (22) 0,01 ≤ b/B ≤ 0,90, insbesondere 0,05 ≤ b/B ≤ 0,50, vorzugsweise 0,10 ≤ b/B ≤ 0,25 und besonders bevorzugt 0,15 ≤ b/B ≤ 0,20 gilt.

9. Verfahren nach einem der Ansprüche 1 bis 8 bei dem der Fördergurt (40) zumindest teilweise in das Material des Halbzeugs (20) eingedrückt wird.

10. Verfahren nach einem der Ansprüche 1 bis 9 bei dem der Fördergurt (40) aus einem textilen Material hergestellt ist, wobei das textile Material an einer Oberseite und/oder eine Unterseite des Fördergurts mit einer Trennschicht zur Bereitstellung einer Abtrennbarkeit des Fördergurts (40) von dem Halbzeug (20) versehen ist.

11. Verfahren nach einem der Ansprüche 1 bis 10 bei dem die Fördereinrichtung (22) mindestens eine aktiv angetriebene Rolle, die insbesondere Teil einer Abzugseinrichtung zur Bereitstellung einer Zugkraft an dem Halbzeug (20) ist, aufweist, wobei der Fördergurt (40) an einer aktiv angetriebenen Rolle entlang abgezogen wird.

12. Verfahren nach einem der Ansprüche 1 bis 11 bei dem derjenige sich in Förderrichtung erstreckende Anteil des Halbzeugs (20), der in Kontakt mit dem Fördergurt (40) war, nach dem Abtrennen als Platten (36) in der Vereinzelungseinrichtung (32) als Ausschuss abgesondert wird.

13. Verfahren nach einem der Ansprüche 1 bis 12 **dadurch gekennzeichnet, dass** der Fördergurt (40) mit einer Fördergeschwindigkeit vi von 4,5 m/min ≤ v₁ ≤ 21,0 m/min, insbesondere 5,0 m/min ≤ v₁ ≤ 8,0 m/min und vorzugsweise vi = 5,5 m/min ± 0,5 m/min oder vi = 7,5 m/min ± 0,5 m/min gezogen wird.

14. Verfahren nach einem der Ansprüche 1 bis 13 bei dem der abgezogene Fördergurt (40) für eine erneute Durchführung des Verfahrens nach einem der Ansprüche 1 bis 14 wiederverwendet wird.

## Claims

1. Method of starting up a production line (10) for producing extruded panels (36), in particular panels for covering a surface of a room, wherein
an extruded semi-finished product (20) is pressed with a free end (48) onto a conveyer (22),
wherein the conveyor (22) is configured to pull the semi-finished product (20) to a separating device (32) for cutting separated plates (36) from the semi-finished product (20) cooled down and solidified to a continuous base profile (30), in particular along a cutting line extending transversely to the conveying direction,
wherein a conveyor belt (40) extending in the conveying direction is placed on the conveyor (22),
the free end (48) of the semi-finished product (20) is pressed onto the conveyor belt (40),
the conveyor belt (40) is pulled together with the semi-finished product (20) toward the separating device (32), and
the free end (48) of the semi-finished product arriving at the separating device (32) is introduced into the separating device (32), while the conveyor belt (40) is pulled away from the semi-finished product (20), in particular downwards, upstream of the separating device (32).

2. Method according to claim 1, wherein the conveyor (22) exerts a pulling force (50) in the conveying direction to the semi-finished product (20) only in a partial region facing the separating device (32).

3. Method according to claim 1 or 2, wherein at the end of the conveyor (22) facing away from the separating device (32), a pressure force (50) is exerted in the conveying direction to the semi-finished product (20) by an extruder (16) and/or a calender (18).

4. Method according to any one of claims 1 to 3, wherein the free end (48) of the semi-finished product (20) at the exit of an extruder (16) is pressed in a substantially molten state onto the conveyor belt (40) which in particular leads to a calender (18), wherein in particular between the semi-finished product (20) and the conveyor belt (40) a fleece (41) is provided for bonding the semi-finished product (20) to the conveyor belt (40).

5. Method according to any one of claims 1 to 4, wherein the conveyor belt (40) is pulled, in particular motorized and/or manually, substantially at a conveying speed provided for continuous normal operation.

6. Method according to any one of claims 1 to 5, wherein exactly only one conveyor belt (40) is used or the movements in the conveying direction of a plurality of conveyor belts (40) provided are positively coupled to one another.

7. Method according to any one of claims 1 to 6, wherein the conveyor belt (40) comprises a pulling end facing the separating device (32) and a loose end facing away from the pulling end, wherein an extension s of the conveyor belt (40) between the pulling end and the loose end corresponds to at least an extension I of the conveyor (22) between a point of impact of the free end (48) of the semi-finished product (20) onto the conveyor (22) and the separating device (32), wherein in particular 1.0 < s/l ≤ 2.0, preferably 1.1 s/l ≤ 1.8 and particularly preferably 1.3 s/l ≤ 1.5 is satisfied.

8. Method according to any one of claims 1 to 7, wherein for a total width b of the at least one conveyor belt (40) transverse to the conveying direction at an average width B of the semi-finished product (20) upon impact on the conveyor device (22) 0.01 ≤ b/B ≤ 0.90, in particular 0.05 ≤ b/B ≤ 0.50, preferably 0.10 ≤ b/B ≤ 0.25 and particularly preferably 0.15 ≤ b/B ≤ 0.20 is satisfied.

9. Method according to any one of claims 1 to 8, wherein the conveyor belt (40) is at least partially pressed into the material of the semi-finished product (20).

10. Method according to any one of claims 1 to 9, wherein the conveyor belt (40) is made of a textile material, wherein the textile material is provided at an upper side and/or a lower side of the conveyor belt with a release layer for providing releasability of the conveyor belt (40) from the semi-finished product (20).

11. Method according to any one of claims 1 to 10, wherein the conveyor (22) comprises at least one actively driven roller, which in particular is part of a pull-off device for providing a pulling force onto the semi-finished product (20), wherein the conveyor belt (40) is pulled off along an actively driven roller.

12. Method according to any one of claims 1 to 11, wherein that portion of the semi-finished product (20) extending in the conveying direction, that has been in contact with the belt (40), is discarded as reject after cutting as plates (36) in the separating device (32).

13. Method according to any one of claims 1 to 12, **characterized in that** the conveyor belt (40) is pulled at a conveying speed v₁ of 4.5 m/min ≤ v₁ ≤ 21.0 m/min, in particular 5.0 m/min ≤ v₁ ≤ 8.0 m/min and preferably v₁ = 5.5 m/min ± 0.5 m/min or v₁ = 7.5 m/min ± 0.5 m/min.

14. Method according to any one of claims 1 to 13, wherein the pulled off conveyor belt (40) is reused for a renewed implementation of the method according to any one of claims 1 to 14.

## Revendications

1. Procédé de démarrage d'une installation de production (10) pour la fabrication de plaques (36) extrudées, notamment destinées à des panneaux pour le recouvrement d'une surface d'une pièce, chez lequel
un produit semi-fini (20) extrudé avec une extrémité libre (48) est appliqué par pressé sur un dispositif de transport (22),
dans lequel le dispositif de transport (22) est conçu pour retirer le produit semi-fini (20) en direction d'un dispositif de séparation (32) permettant de séparer des plaques (36) individuelles à partir du produit semi-fini (20) refroidi et solidifié sous forme d'un profilé de base sans fin (30), en particulier le long d'une ligne de séparation s'étendant perpendiculairement par rapport à la direction de transport,
dans lequel une bande de transport (40) s'étendant dans la direction de transport est posée sur le dispositif de transport (22),
l'extrémité libre (48) du produit semi-fini (20) est pressée sur la bande de transport (40), la bande de transport (40) est tirée conjointement avec le produit semi-fini (20) sur le dispositif de séparation (32), et
l'extrémité libre (48) du produit semi-fini arrivant au dispositif de séparation (32) est insérée dans le dispositif de séparation (32), tandis que la bande de transport (40) est retirée du produit semi-fini (20), en particulier vers le bas, avant le dispositif de séparation (32).

2. Procédé selon la revendication 1, chez lequel le dispositif de transport (22) n'exerce une force de traction (50) dans la direction de transport uniquement dans une zone partielle orientée vers le dispositif de séparation (32) sur le produit semi-fini (20).

3. Procédé selon la revendication 1 ou la revendication 2, chez lequel une force de compression (46) dans la direction de transport est exercée sur le produit semi-fini (20) sur l'extrémité du dispositif de transport (22) opposée au dispositif de séparation (32) par une extrudeuse (16) et/ou une calandreuse (18).

4. Procédé selon l'une des revendications 1 à 3, chez lequel l'extrémité libre (48) du produit semi-fini (20) est pressée à la sortie d'une extrudeuse (16) dans un état essentiellement fondu sur la bande de transport (40) menant en particulier vers une calandreuse (18), où en particulier un non-tissé (41) est prévu entre le produit semi-fini (20) et la bande de transport (40) pour la liaison du produit semi-fini (20) avec la bande de transport (40).

5. Procédé selon l'une des revendications 1 à 4, chez lequel la bande de transport (40) est tirée essentiellement avec une vitesse de transport prévue pour un fonctionnement normal en continu, notamment de manière motorisée et/ou manuelle.

6. Procédé selon l'une des revendications 1 à 5, chez lequel uniquement une bande de transport (40) est précisément employée ou le déplacement dans la direction de transport s'effectue à partir de plusieurs bandes de transport (40) accouplées ensemble de force.

7. Procédé selon l'une des revendications 1 à 6, chez lequel la bande de transport (40) présente une extrémité de traction orientée vers le dispositif de séparation (32) et une extrémité libre pointant en s'éloignant de l'extrémité de traction, où un étirement s de la bande de transport (40) entre l'extrémité de traction et l'extrémité libre correspond à au moins un étirement l du dispositif de transport (22) entre un point de présence de l'extrémité libre (48) du produit semi-fini (20) sur le dispositif de transport (22) et le dispositif de séparation (32), où, on a, en particulier, 1,0 < s/l ≤ 2,0, de préférence 1,1 ≤ s/l ≤ 1,8 et de manière particulièrement préférée 1,3 ≤ s/l ≤ 1,5.

8. Procédé selon l'une des revendications 1 à 7, chez lequel on a, pour la largeur totale b de l'au moins une bande de transport (40) perpendiculairement par rapport à la direction de transport pour une largeur B moyenne du produit semi-fini (20) lors de la rencontre sur le dispositif de transport (22), 0,01 ≤ b/B ≤ 0,90, en particulier, 0,05 ≤ b/B ≤ 0,50, de préférence, 0,10 ≤ b/B ≤ 0,25 et de manière particulièrement préférée 0,15 ≤ b/B ≤ 0,20.

9. Procédé selon l'une des revendications 1 à 8, chez lequel la bande de transport (40) est incorporée par pression au moins partiellement dans le matériau du produit semi-fini (20).

10. Procédé selon l'une des revendications 1 à 9, chez lequel la bande de transport (40) est fabriquée dans un matériau textile, où le matériau textile est muni d'une couche de séparation permettant la mise en place d'une séparation de la bande de transport (40) du produit semi-fini (20) sur une face supérieure et/ou une face inférieure de la bande de transport (40).

11. Procédé selon l'une des revendications 1 à 10, chez lequel le dispositif de transport (22) présente au moins un rouleau entraîné activement qui fait en particulier partie d'un dispositif de séparation permettant l'exercice d'une force de traction sur le produit semi-fini (20), où la bande de transport (40) est séparée le long d'un rouleau entraîné activement.

12. Procédé selon l'une des revendications 1 à 11, chez lequel la partie du produit semi-fini (20) s'étendant dans la direction de transport en question, qui était en contact avec la bande de transport (40), est séparée sous forme de rebut après la séparation sous forme de plaques (36) dans le dispositif de séparation (32).

13. Procédé selon l'une des revendications 1 à 12, **caractérisé en ce que** la bande de transport (40) est tirée avec une vitesse de transport v₁ de 4,5 m/min ≤ v₁ ≤ 21,0 m/min, en particulier 5,0 m/min ≤ v₁ ≤ 8,0 m/min et de préférence v₁ = 5,5 m/min ± 0,5 m/min, ou v₁ = 7,5 m/min ± 0,5 m/min.

14. Procédé selon l'une des revendications 1 à 13, chez lequel la bande de transport (40) séparée est de nouveau employée pour une nouvelle exécution du procédé selon l'une des revendications 1 à 14.
